# EUROPEAN PATENT SPECIFICATION

(11) **EP 3 506 130 B1**
(45) Date of publication and mention of the grant of the patent: **18.10.2023**
(21) Application number: 18153627.7
(22) Date of filing: 26.01.2018
(51) Int. Cl.: G06F 16/30, G06F 12/08

(54) **DATA EXTRACTING SYSTEM AND METHOD**
DATENEXTRAKTIONSSYSTEM UND VERFAHREN
SYSTÈME D'EXTRACTION DE DONNÉES ET PROCÉDÉ

(30) Priority: 27.12.2017 GB 201721942
(43) Date of publication of application: 03.07.2019
(73) Proprietor: Palantir Technologies Inc., Denver, CO 80202 (US)
(72) Inventor: KALINICENKO, Eduards, Palo Alto, CA California 94301 (US); HALLGREN, Jeppe, Palo Alto, CA California 94301 (US); SEEBACH, Martin, Palo Alto, CA California 94301 (US)
(74) Representative: Derry, Paul Stefan

(56) References cited:
- US-A1- 2016 092 407
- US-A1- 2017 116 283
- JIAN WU ET AL: "PDFMEF : A Multi-Entity Knowledge Extraction Framework for Scholarly Documents and Semantic Search", PROCEEDINGS OF THE KNOWLEDGE CAPTURE CONFERENCE ON ZZZ, K-CAP 2015, 10 October 2015 (2015-10-10), pages 1-8, XP055458384, New York, New York, USA DOI: 10.1145/2815833.2815834 ISBN: 978-1-4503-3849-3
- STELLY CHRISTOPHER ET AL: "SCARF: A container-based approach to cloud-scale digital forensic processing", DIGITAL INVESTIGATION, ELSEVIER, AMSTERDAM, NL, vol. 22, 5 August 2017 (2017-08-05), XP085155520, ISSN: 1742-2876, DOI: 10.1016/J.DIIN.2017.06.008
- SIMSON L. GARFINKEL: "Digital media triage with bulk data analysis and bulk_extractor", COMPUTERS & SECURITY., vol. 32, 1 February 2013 (2013-02-01), pages 56-72, XP055458236, NL ISSN: 0167-4048, DOI: 10.1016/j.cose.2012.09.011
- AHMED HUSSEIN ET AL: "One Process to Reap Them All", VIRTUAL EXECUTION ENVIRONMENTS, ACM, 2 PENN PLAZA, SUITE 701 NEW YORK NY 10121-0701 USA, 8 April 2017 (2017-04-08), pages 171-186, XP058327086, DOI: 10.1145/3050748.3050754 ISBN: 978-1-4503-4948-2

## Description

### TECHNICAL FIELD

The subject innovations relate to extractor systems for providing modified data items from input data items.

### BACKGROUND

Computers are very powerful tools for processing information. This information is likely to be of various types and formatted in numerous ways. In some circumstances, the provided information may not be in the desired form to be processed by some particular computerized system. A computerized extractor system is a useful mechanism for modifying the provided information so that it can be provided to the particular computerized system in the desired form. A typical extractor system is a computer program that receives data in one format and outputs it in another format.

An extractor system is typically part of a data pipeline system. A typical data pipeline system is a collection of computer software scripts and programs for processing data extracted from "data sources" and for providing the processed data to "data sinks". A typical data pipeline system will also store the extracted data and/or some transformation of it.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

JIAN WU ET AL, "PDFMEF : A Multi-Entity Knowledge Extraction Framework for Scholarly Documents and Semantic Search", PROCEEDINGS OF THE KNOWLEDGE CAPTURE CONFERENCE ON ZZZ, K-CAP 2015, ISBN 978-1-4503-3849-3 discloses a multi-entity knowledge extraction framework for scholarly documents in the PDF format. It is implemented with a framework that encapsulates open-source extraction tools.

US 2017/0116283 A1 discloses an extraction system that reuses extractors that have been already instantiated for similar extraction events.

### SUMMARY

A first aspect of the specification provides a data extracting system as claimed in appended claims 1 to 8.

The one or more computer programs may be configured not to reuse the extractor for the specific data item if an override flag is set.

The one or more sections may be defined by one or more numerical values each relating to a location within the data item

The location may be a character offset.

A second aspect of the specification provides a method as claimed in appended claims 9 to 14.

A third aspect provides a computer program comprising instruction that when executed by a data extracting system having an extractor manager and plural extractors cause it to perform any method above.

### BRIEF DESCRIPTION OF THE DRAWINGS

The features of the subject innovations are set forth in the appended claims. However, for purpose of explanation, several aspects of the disclosed subject matter are set forth in the following figures.
Figure 1 is a block diagram illustrating an example of a computer system configured to modify data items using extractors as part of a data processing pipeline, in accordance with example embodiments;
Figure 2 is a flow diagram illustrating an example method by which extractor processes are used to modify data items, in accordance with example embodiments;
Figure 3 is a flow diagram illustrating an example sub method by which data items are allocated to extractor processes, in accordance with example embodiments;
Figure 4 is a schematic diagram of a computing device in which software-implemented processes of the example embodiments may be embodied;
Figure 5 is a block diagram of components of an example processor suited to implement the methods of the example embodiments; and
Figure 6 is a schematic diagram demonstrating how certain extractor system processes are represented in both physical and virtual memory.

### DETAILED DESCRIPTION

The detailed description set forth below is intended as a description of various configurations of the subject innovations and is not intended to represent the only configurations in which the subject innovations may be practiced. The appended drawings are incorporated herein and constitute a part of the detailed description. The detailed description includes specific details for the purpose of providing a thorough understanding of the subject innovations. However, the subject innovations are not limited to the specific details set forth herein and may be practiced without these specific details. In some instances, some structures and components are shown in block diagram form in order to avoid obscuring the concepts of the subject innovations.

### General Overview

For ease of explanation, the subject innovations are largely described in the context of a data pipeline system. It should, however, be recognized that these innovations are applicable in other contexts. Examples of such contexts include, but are not limited to, video processing, network management, and cryptography.

As noted above, in a typical data pipeline system, data from various types of data items need to be extracted so that the data can be further processed and/or stored by the system. As used herein, the term "extract" and its variants refer to outputting a modified data item based on a data item input where the modified data item is suitable for further processing and/or storage by the data pipeline system. Similarly, an "extractor" refers to computer software for extraction, as defined above. The types of inputted data items may include one or more of documents, in a variety of formats, images and spreadsheets. The types of the outputted modified data items may include one or more of text data, numerical data and compressed representations.

While extractors are essential components in many data pipeline systems, they are often unreliable aspects of such systems and are prone to critical malfunctioning. One reason for their unreliability is that data items may be corrupted or otherwise may not comply with the relevant specification. An extractor engineer can be aware of these potential problems and attempt to handle them in the configuration of the extractor. It is, however, incredibly difficult, if not impossible, for an extractor to handle all such potential problems satisfactorily. It should also be noted that such critical malfunctioning of the extractor has the potential to cause critical malfunctioning of other components of the data pipeline system.

These problems may be exacerbated by the need for frequent changes to the extractors due to both changes in the specifications of data item types and the desired output. Such changes are common. There is also a need to rapidly support new data item formats.

Extractors are, therefore, commonly built and/or modified in short time frames. This is likely to increase the probability of software bugs. Furthermore, error handling functionality is often viewed as a secondary concern so it is unlikely that satisfactory error handling functionality will have been implemented and tested within these short time frames. As the foregoing illustrates, an approach for satisfactorily handling the critical malfunctioning of extractors may be desirable.

The subject innovations relate to providing an extracting system that is able to satisfactorily handle the critical malfunctioning of one or more extractors within the extracting system. A server may receive a request to extract data from one or more data items. For example, on receiving a user instruction, a client application may make an application programming interface (API) call to the server requesting that these extractions be performed. The server may then forward this request to a data pipeline system that contains an extracting system. The extracting system includes an extractor management program. The extractor management program requests, and subsequently receives, the one or more data items from the file storage system. These data items are then allocated to one or more processes, spawned previously, each containing at least one extractor. These extractors then perform the extraction. For example, the extraction may involve receiving a scanned document, performing optical character recognition on the document and outputting the generated text. The extractor management program then receives one or more modified data items from each of the one or more processes. The extractor management program then outputs the one or more modified data items. While reference has been made to an 'extractor management program', the relevant functionality may alternatively be implemented by multiple computer programs.

It is important to highlight that the term 'process' refers to a computer process, as is common nomenclature in the art, rather than its plain meaning. A process includes executable machine code that is associated with a program. Memory is assigned to the process. The assigned memory typically is allocated as virtual memory. Virtual memory is an abstraction that presents a, typically distinct, contiguous address space to each process which is mapped on to a portion of main memory and/or other computer storage. By presenting virtual memory rather than physical memory to a process, a process is prohibited from writing to the portions of main memory assigned to other processes except through prescribed mechanisms. A process also includes or is associated with an operating system handle. This handle enables the operating system to monitor and manage the process. It may also enable the operating system to kill the process for any reason. This functionality has particular utility when a process is critically malfunctioning. Many processors and operating systems provide hardware and software support, respectively, for at least several of the above features of a process. Exploiting such functionality, particularly in the context of software components, such as extractors that are prone to critical malfunctioning, can therefore be advantageous.

In some implementations, the extractor management program may use the process management functionality of the operating system to kill the extractor processes that are critically malfunctioning. The extractor management program may also preemptively kill extractor processes that are taking longer than a specified time period to complete an extraction as this may be indicative of a malfunction. In certain circumstances, extractor processes may also self-terminate. In this case, the extractor management program detects the termination of the extractor process.

Optionally, the extractor management program may include functionality for reattempting failed extractions. After killing the extractor process and/or detecting that the process has died, the extractor management program may reattempt the extraction by reallocating the data item to another extractor process. These reattempts and reallocations may be performed several times and, in theory, could be repeated ad infinitum. Practically, success with a given extractor on a given data item is highly unlikely after multiple reattempts and reallocations. It may, therefore, be desirable to limit the number of reattempts and reallocations to a given threshold. Alternatively or in addition to reattempting the extraction, the extractor management program may report the failure to the data pipeline system.

Despite the foregoing benefits, there may be costs associated with the subject innovations. An example of such a cost may be the overheads involved in process creation. In one implementation, one or more extractor processes may be kept alive and used for multiple extractions. Such an implementation may ameliorate this drawback by reducing the number of processes that need to be created.

The containment of the extractors within processes may also enable the extractors to have conflicting dependencies, e.g. depend on two different versions of the same software library. One instance where such functionality may be advantageous is where there is a requirement to use two versions of the same extractor. Another instance is where the extractors depend on different versions of one or more frameworks. This may be because the extractors vary considerably in age with the initial implementation of one extractor beginning or otherwise taking place significantly before one or more other extractors.

### Example Computer System

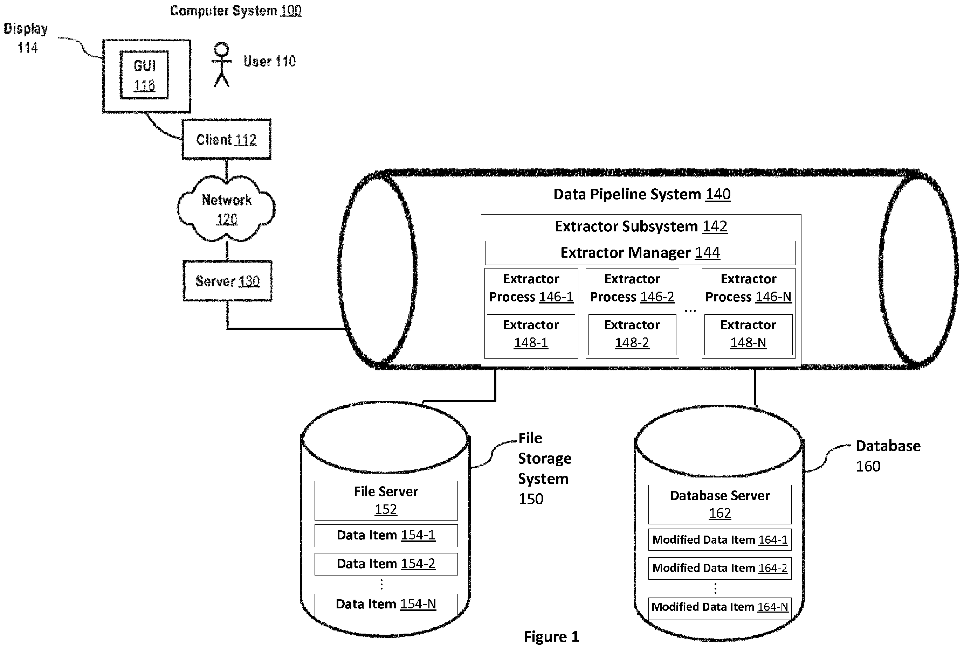

Figure 1 illustrates an example of a computer system 100 configured to perform extraction. As shown, the computer system 100 includes a client computing device 112 used by a human user 110, a server 130, a data pipeline system 140, a file storage system 150 and a database 160. The client computing device 112 and the server 130 may be configured to communicate with one another via a network 120. The network 120 may include the Internet, an intranet, a local area network, a wide area network, a wired network, a wireless network, and a virtual private network (VPN). For ease of understanding, various components of the system have each been described with reference to one or more computing devices. It should be noted that, in same embodiments, any number of these components may be collocated on the same computing device.

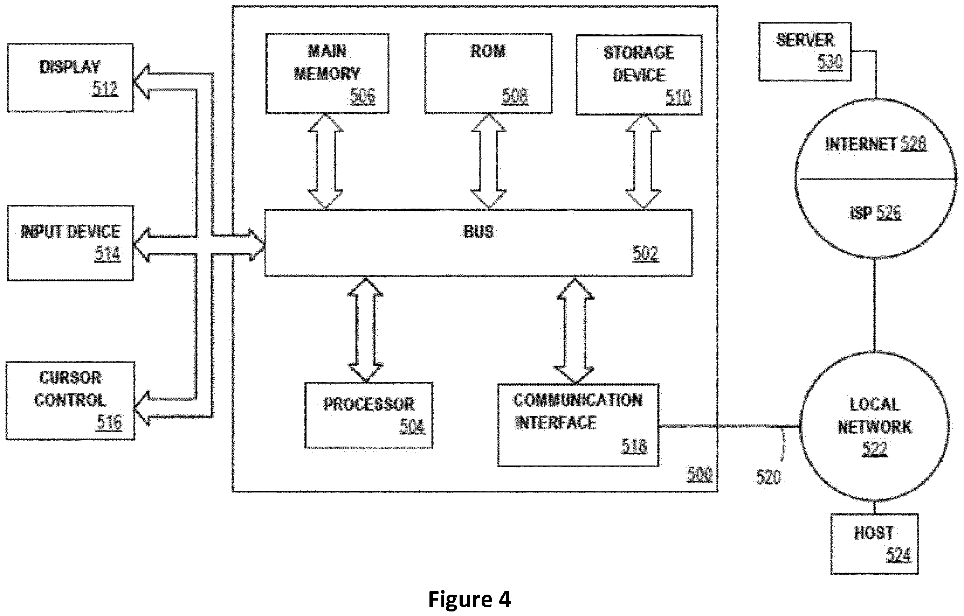

The client computing device 112 may for instance be a laptop computer, a desktop computer, a mobile phone, a personal digital assistant (PDA), a tablet computer, a netbook, a television with one or more processors, embedded therein or coupled thereto, a physical machine or a virtual machine. The client computing device 112 may include one or more of a keyboard, a mouse, a display 114, or a touch screen (of which display 114 may be a part of). For example, the client computing device 112 may be composed of hardware components like those of basic computing device 500 described below with respect to Figure 4. The client computing device 112 may also include a web browser or a client application configured to display, in a graphical user interface 116 of the client computing device 112 display 114, a computer program for performing extractions. Such a computer program may allow the user to indicate the data items 154 for extractions and where the modified data item 164 should be stored. It may also allow the user to specify other operations that should be performed by the data pipeline system 140. The graphical user interface 116 may be a web browser window, a client application window, an operating system window, an integrated development environment window, a virtual terminal window or other computer graphical user interface window. While only one user 110 and one client computing device 112 are illustrated in Figure 1, the subject innovations may be implemented in conjunction with one or more users 110 and one or more client computing devices 112.

The server 130 may include a data pipeline system control module which is capable of receiving instructions for extraction from a client device 112 and requesting that the data pipeline system 140 perform the extraction. The server 130 may be implemented as a single server computing device or as multiple server computing devices arranged in a distributed or clustered computing arrangement. Each such server computing device may be composed of hardware components like those of basic computing device 500 described below with respect to Figure 4.

The server 130 may include one or more processors (e.g., CPUs), a network interface, and memory. The processor(s) may be configured to execute computer instructions that are stored in one or more computer-readable media, for example, the memory of the server 130. The server 130 may include a network interface that is configured to allow the server 130 to transmit and receive data in a network, e.g., network 120 of Figure 1. The network interface may include one or more network interface cards (NICs). The memory of the server 130 may store data or instructions. The instructions stored in the memory may include the data pipeline system control module.

The data pipeline system 140 includes an extractor subsystem 142, which is configured to derive modified data items 164 from input data items 154. In this representative embodiment, the input data items are contained and received from the file storage system 150 and the modified data items are stored in the database 160. However, either or both of the input data items 154 and the modified data items 164 may instead be present, retrieved from and/or stored to, any of the computing devices of the computer system 100. For example, the input data items 154 may be present on and received from the database 160. They may also be present on, retrieved from and/or stored to any computing device or storage medium accessible, directly or indirectly, by the data pipeline system 140.

The extractor subsystem 142 contains an extractor manager 144 configured to create and/or manage one or more extractor processes 146. Each of these extractor processes contains one or more extractors 148, which are software components configured to perform extraction. As part of this management functionality, the extractor manager 144 may have functionality, or use relevant operating system functionality, to kill extractor processes and/or determine which extractor processes have died. It may also be capable of detecting one or more other conditions that are indicative of the failure of a extractor process failing such as taking an above threshold time to complete extraction, excessive processor usage and excessive memory usage. The extractor manager 144 may parse extraction instruction then cause extractor processes 146 to extract the data items specified by said extraction instruction. The extractor processes 146 then use the respective extractors 148 to perform the extraction and output its result. This result may be received by the extractor manager 144. It may then be outputted to the remainder of the data pipeline system 140 and/or stored.

The extractor manager 144 may also limit the system resources, such as memory and/or CPU cycles, available to each of the extractor processes 146. This may prevent the situation where excessive resource usage by a given extractor process causes other processes, such as other extractors and the extractor manager 144, on the system to significantly slow and/or fail. The system resources available to each extractor process 146 may be limited using appropriate operating system functionality. Alternatively or in addition, the system resources may be limited by passing parameters to the software platform, e.g. the Java Virtual Machine (JVM), upon which the extractor 148 runs and/or the extractor 148 itself may limit the amount of resources according to a parameter received from the extractor manager 144.

In the embodiment illustrated, each extractor process 146 contains one extractor 148. This embodiment is illustrated as it prevents the failure of any one extractor causing the critical malfunctioning of any other extractor. It should, however, be recognized that one or more of the extractor processes 146 may contain a plurality of extractors 148. For example, one extractor process 146 may contain several distinct extractors 148 that are less prone to critical malfunctioning such as text extractors for Word and PDF formats. Another extractor process 146 may contain an OCR extractor that is more prone to critical malfunctioning. In this way, the extractor subsystem 142 requires fewer processes while still segregating extractors that are likely to malfunction from the rest of the system. In addition or alternatively, the extractor process 146 that a given extractor 148 is contained within may be determined by the software platform, e.g. Java, .NET or Python, upon which it runs. This would provide segregation between the extractors 148 running on these different software platforms while not requiring that multiple instances of these platforms, which consume significant resources, be initialized.

Optionally, each extractor process 146 may also have a plurality of threads. The plurality of threads may be used by one extractor 148 or by multiple extractors. These threads may allow multiple operations to be carried out simultaneously by different CPUs and/or simultaneous multithreading capabilities of the CPU without the overhead of process creation. Such threads are likely to be implemented as native operating system threads. Alternatively, the threads may be implemented as green threads which are scheduled using a software platform such as the JVM.

The data pipeline system 140 may be implemented as a single server computing device or as multiple server computing devices arranged in a distributed or clustered computing arrangement. Each such server computing device may be composed of hardware components like those of basic computing device 500 described below with respect to Figure 4.

The data pipeline system 140 may include one or more processors (e.g., CPUs), a network interface, and memory. The processor(s) may be configured to execute computer instructions that are stored in one or more computer-readable media, for example, the memory of the data pipeline system 140. The data pipeline system 140 may include a network interface that is configured to allow the data pipeline system 140 to transmit and receive data in a network, e.g., a network connecting the data pipeline system 140 and the file storage system 150 and a network connecting the data pipeline system 150 to the database 160, which may be the same or different network as the network that connects the data pipeline system 150 and the file storage system 140. The network interface may include one or more network interface cards (NICs).

The file storage system 150 may include a file server module 152 for storing and retrieving data items 154. The file storage system 150 may be implemented as a single server computing device or as multiple server computing devices arranged in a distributed or clustered computing arrangement. Each such server computing device may be composed of hardware components like those of basic computing device 500 described below with respect to Figure 4.

The file storage system 150 may include one or more processors (e.g., CPUs), a network interface, and memory. The processor(s) may be configured to execute computer instructions that are stored in one or more computer-readable media, for example, the memory of the file storage system 150. The file storage system 150 may include a network interface that is configured to allow the file storage system 150 to transmit and receive data in one or more networks, e.g., a network connecting the server 130 and the file storage system 150 and a network connecting the data pipeline system 140 to the file storage system 150, which may be the same or different network as the network that connects the server 130 and the file storage system 150. The network interface may include one or more network interface cards (NICs). The memory of the file storage system 150 may store data or instructions. The instructions stored in the memory may include the file server module 152.

The database 160 may include a database server module 162for storing and retrieving database data including modified data items 164. The database 160 may be implemented as a single server computing device or as multiple server computing devices arranged in a distributed or clustered computing arrangement. Each such server computing device may be composed of hardware components like those of basic computing device 500 described below with respect to Figure 4.

The database 160 may include one or more processors (e.g., CPUs), a network interface, and memory. The processor(s) may be configured to execute computer instructions that are stored in one or more computer-readable media, for example, the memory of the database 160. The database 160 may include a network interface that is configured to allow the database 160 to transmit and receive data in one or more networks, e.g., a network connecting the server 130 and the database 160 and a network connecting the data pipeline system 140 to the database 160, which may be the same or different network as the network that connects the server 130 and the database 160. The network interface may include one or more network interface cards (NICs). The memory of the database 160 may store data or instructions. The instructions stored in the memory may include the database server module 162.

The data items 154 may be computer files of the same or different types. These types of files may include but are not limited to images, word processor documents, document presentation formats, spreadsheets, slideshows, videos, archives, code, text, numerical data formats, markup language and encrypted data files. The data items 154 may also be fragments of files. For example, the data items 154 could be spreadsheet rows, a slideshow slide or a video frame. The data items 154 may also be rows of a database table, or entries contained in a document-oriented or objected-oriented database. The data items may also be in-memory objects. It should be recognized that the types of data items 154 are not limited to only one of the preceding categories and could be any number or combination of these categories. For example, some portion of the data items could be files and some other portion could be database rows. The types of the modified data items 164 could be any number of the types specified above. In addition, a modified data item could be an encrypted or decrypted rendition of the corresponding input data item or some portion of it.

### Example Extraction Method

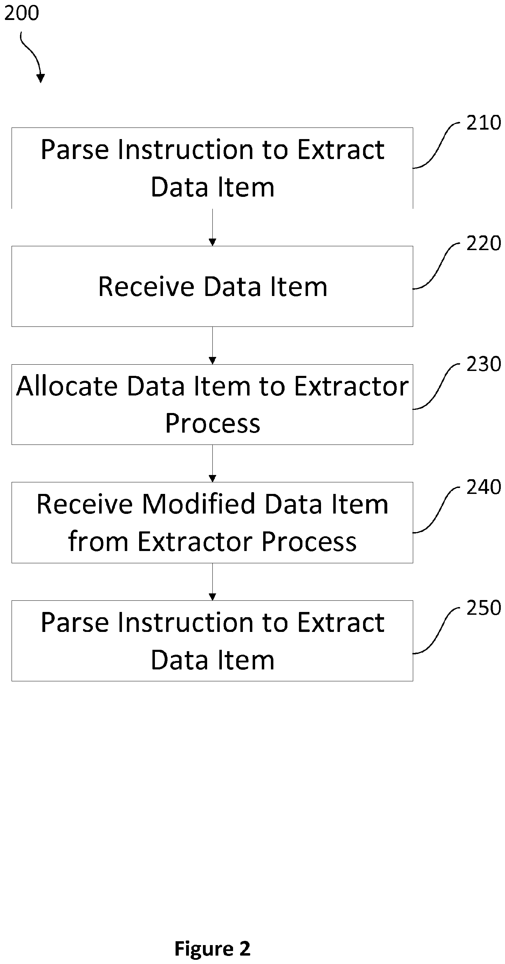

Figure 2 is a flowchart illustrating an example method 200 by which extraction of data items is provided. The method 200 is performed by computer-readable instructions, e.g. software, for execution by one or more processors of one or more computing devices (e.g., the basic computing device 500 of Figure 4). In one embodiment, the one or more computing devices are part of a data pipeline system 140.

The method 200 begins at step 210, where an extractor manager (e.g., extractor manager 144) parses one or more extraction instructions. By parsing the one or more extraction instructions, the extractor manager 144 obtains information which can used to locate one or more data items (e.g., the location on the file storage system of data item 154-1), one or more data items (e.g., data item 154-1 itself), or both. The information used to locate one or more data items can take a variety of forms including, but not limited to, a location on a file storage system, a URI, a REST endpoint address, a SOAP endpoint address, a database access instruction (e.g., a SQL statement) and a memory address.

In some embodiments, the extraction instructions include an indication of the extractor type to be used The extractor manager 144 may determine the meaning of this indication from the parsed extraction instruction. This indication could come in a variety of formats. In some embodiments, the indication is an identifier (e.g., a name or numerical key) that is understood by the extractor subsystem 142 to relate to a particular extractor type and/or group of extractor types known to the extractor system. The group of extractors could contain multiple versions of extractors for extracting data items in the same or similar formats.

In some embodiments, the group of extractor types is an 'extractor strategy'. An extractor strategy is an ordered list of extractor indicators. The extractor strategy indicates that the extractor subsystem 142 should first attempt to extract using the an extractor of the first extractor type (e.g. 148-1) in the list then, if that fails, the second and so on until extraction has been attempted by the last extractor in the list. Alternatively, an extractor strategy may specify that extraction should be performed using all of the extractor types indicated and their results compare and/or combined. For example, the strategy may indicate that both an OCR extractor and a conventional text extractor should be run on a PDF file. The conventional text extractor result may be compared to the OCR extractor result. If they are largely similar then the likely more accurate conventional text extractor result is used. If the conventional text extractor result contains no content then the OCR extractor result is used. While if there is substantially different or more content in the OCR result, the results of both extractors are combined to use the more accurate conventional text extractor content except where content is only available in the OCR extractor.

In step 220, a data item 154 is received. If a location indicator was included in the extraction instruction, the data item 154 is retrieved from the relevant location by the extractor manager 144. If the data item 154 itself was included in the instruction, the data item is obtained by the extractor manager 144 from the instruction itself.

In step 230, the data item 154 is allocated to an extractor process 146. The extractor process 146 to which the item is allocated is determined by parsing the extraction instruction to determine the extractor type indicated and/or by the data item 154. For example, the instruction may specify directly or indirectly the extractor process and/or the data item 154 may be of a type appropriate for a given extractor process 146. Alternatively or additionally, the extractor process 146 to which the data item 154 is allocated is determined according to the location of the data item and/or the contents of the data item.

An extractor process 146 is initialized by the extractor manager 144 immediately prior to allocation of the data item 154. In some embodiments, the extractor manager 144 terminates the extractor process 146 immediately on completion of the extraction. The extractor processes 146 may alternatively be kept alive by the extractor manager 144 for use by later extractions.

In step 240, the modified data item 164 is received by the extractor manager 144. The modified data item may be sent to the extractor manager 144 by the extractor process 146. For example, the extractor process 146 may write the modified data item 164 to standard output where it can be read via standard input by the extractor manager 144. The contained extractor 148 may also write to a file or to a particular section of shared memory where it can be read by the extractor manager 144. Any other mechanism to transfer data items between processes may also be used here including inter-process communication, API calls, system calls, and network transfer protocols.

In step 250, the modified data item 164 is outputted by the extractor manager 144. In the context of a data pipeline system 140, this may involve transferring the modified data item 164 to the next stage in the data pipeline. This transfer may occur by any of the data item transfer mechanisms previously specified. Alternatively, the extraction subsystem 142 may write the modified data item 164 to a data storage medium such as the database 160 or the file storage system 150.

### Example Allocation Method

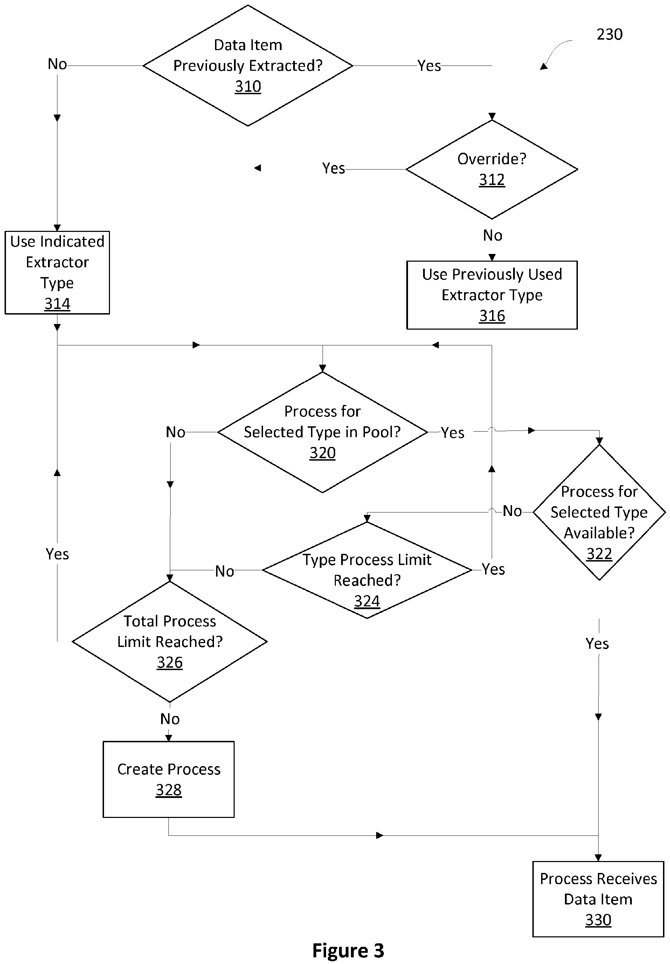

Figure 3 is a flowchart illustrating an example implementation of step 230 of the preceding figure, as a sub method by which data items are allocated to extractor processes 146. It should be understood that any of the steps indicated by this Figure may be performed in a different order to that indicated. In particular, the selection of extractor type as described in steps 310 to 316, and the allocation of the process as described in steps 320 to 330 should be recognized as distinct aspects. It should also specifically be noted that any number of the checks described in 320 to 326 may be performed.

The sub method 230 begins at step 310. In step 310, the extractor manager 144 determines whether the data item 154 has been extracted before by checking for a database entry, e.g. the data item ID. Alternatively or additionally, the extractor manager 144 determines whether the data item 154 has been extracted by reading a list of data objects stored in the extractor manager 144 memory, reading the contents of a file, analyzing the metadata of the data item or analyzing the contents of the data item.

If the data item 154 has been extracted beforehand, in step 312, the extractor manager 144 parses the instruction to determine whether an override flag is set. If the override flag has been set, the extractor type indicated by the extraction instruction is selected in step 314. Alternatively or in addition, the extractor type is selected based on any of the other factors previously mentioned such as the file type. The same occurs if the data item 154 has not been previously extracted.

If the data item 154 has been previously extracted and the override flag has not been set then, in step 316, the extractor type used previously for the data item is selected. For the extractor manager 144 to determine which extractor type was used previously, a record of which extractor type was used for each data item 154 is kept. This record is stored as a set of database entries and/or a file on the disk. Alternatively or in addition, the record may be stored as an in-memory object and/or as file metadata. Using the same extractor type for the same data item 154 may ensure that data associated with a section of the extracted data item remains associated with the same content. For example, an annotation may be associated with a set of characters of the extracted data item 154 defined by a start and end position or, where the extracted data item is an image, a pixel location. Alternatively, where the extracted data item 154 is a database record, the annotation may be associated with a particular column using its column name. If a different extractor type is used then the extracted data changed, the annotation would then be associated with the wrong content.

In step 320, the extractor manager 144 determines whether there is already a process 146 containing an extractor 148 of the selected type present in the extractor pool. The extractor pool is a set of previously initialized extractor processes 146. An extractor pool is beneficial as unnecessary initializations may be avoided.

The extractor processes 146 in the pool are initialized preemptively. They may then be used multiple times for multiple extractions. The extractor manager 144 may initialize these processes unconditionally shortly after its own initialization. Additionally, the extractor manager 144 intelligently determines when it expects the extractor to be used and initialize the process shortly before it is needed. The extractor manager 144 performs this intelligent determination by training a machine learning model, such as a neural network, on the historical logs of extractor usage. These logs contain the order in which different extractors 148 have been used; the times at which different extractors have been used; and the individuals who have used these extractors.

If at least one extractor process 146 containing an extractor 148 of the selected type is present in the pool then, in step 322, the extractor manager 144 determines whether any of these are currently available i.e. not being used for another extraction. The extractor manager 144 determines whether any such processes 146 are available by keeping a record of all of the processes 146 previously initialized, which of these are still alive, and which are in use. Alternatively or in addition, the extractor manager 144 determines the available processes using the relevant operating system functionality, e.g. the process manager. If an extractor process 146 containing an extractor 148 of the given type is present then execution passes to step 330.

If there are no available processes 146 containing an extractor 148 of the selected type then, in step 324, the extractor manager 144 determines whether the type process limit has been reached. The type process limit specifies the number of processes 146 containing an extractor 148 of a given type are allowed to be in the pool simultaneously. In some embodiments, this limit is fixed and is the same for each extractor type. It may alternatively be fixed on a per extractor type basis. Alternatively, the type process limit is set dynamically based on a range of factors. A dynamic process limit may be adjusted based on one, some or many factors. Some of these factors relate to computer system properties, e.g. the total and available number of processors, the total and available memory, the extractor processes running on the system and the network capacity. Other factors relate to various settings. These settings include the priority of the given extraction; the global priority of the selected extractor type; the priority of other processes currently running in the pool; and the global priority of the other extractor types currently present in the pool. If the type process limit has been reached, then execution returns to step 320.

If the type process limit has not been reached then, in step 326, the extractor manager 144 determines whether the total process limit has been reached. The total process limit specifies the total number of extractor processes 146 that are allowed to be in the pool simultaneously. In simple embodiments, this limit is fixed. Alternatively, the total process limit is set dynamically based on a range of factors. A dynamic process limit may be adjusted based on a range of factors. Some of these factors relate to computer system properties. These properties include the total and available number of processors; the total and available memory; the other processes running on the system; and the network capacity. Other factors relate to various settings. These settings include the priority of the extraction system; the priority of other processes currently running in the pool; and the priority of the extractor processes currently present in the pool. If the total process limit has been reached, then execution returns to step 320.

If the total process has not been reached then, in step 328, the extractor manager 144 creates a new extractor process containing an extractor of the selected type, and adds it to the pool. On creation of the process, the extractor manager 144 adds it to a process register maintained by the pool. Alternatively, the extractor manager 144 may use operating system functionality to determine what processes 146 are present in the pool.

In step 330, the data item 154 is received by either the available process of step 322 or the created process of step 328. The extractor 148 subsequently performs the extraction and the modified data item 164 is outputted by the extractor 148. The extractor manager 144 then resumes handling in step 240 of Figure 2.

The return of execution to step 320 by steps 324 and 326 may be understood as a simple queuing mechanism. This return ensures that the extractor manager 144 checks the conditions that would allow the data item 154 to be received by an extractor process 146 of the selected type until one of them is met. While, for simplicity of explanation, this is described by way of a simple polling mechanism, it should be noted that this functionality may be provided by any other suitable mechanism, such as an event queue or interrupts.

The extractor processes 146 in the pool are actively managed by the extractor manager 144. This ensures that one of the conditions is eventually met and/or deadlock is avoided. The extractor manager 144 kills those processes that have critically malfunctioned and/or timed out, i.e. reached some time limit after a request has been made to them without outputting a modified data item 164 and/or responding to the extractor manager 144. The extractor manager 144 may then remove them from the process register. In addition or alternatively, the extractor manager 144 kills extractor processes that have not been used for a given period, in order to free up system resources.

### Basic Computing Device

Referring now to Figure 4, it is a block diagram that illustrates a basic computing device 500 in which software-implemented processes of the subject innovations may be embodied. Computing device 500 and its components, including their connections, relationships, and functions, is meant to be exemplary only, and not meant to limit implementations of the subject innovations. Other computing devices suitable for implementing the subject innovations may have different components, including components with different connections, relationships, and functions.

Computing device 500 may include a bus 502 or other communication mechanism for addressing main memory 506 and for transferring data between and among the various components of device 500.

Computing device 500 may also include one or more hardware processors 504 coupled with bus 502 for processing information. A hardware processor 504 may be a general purpose microprocessor, a system on a chip (SoC), or other processor suitable for implementing the subject innovations.

Main memory 506, such as a random access memory (RAM) or other dynamic storage device, also may be coupled to bus 502 for storing information and instructions to be executed by processor(s) 504. Main memory 506 also may be used for storing temporary variables or other intermediate information during execution of software instructions to be executed by processor(s) 504.

Such software instructions, when stored in non-transitory storage media accessible to processor(s) 504, render computing device 500 into a special-purpose computing device that is customized to perform the operations specified in the instructions. The terms "instructions", "software", "software instructions", "program", "computer program", "computer-executable instructions", and "processor-executable instructions" are to be broadly construed to cover any machine-readable information, whether or not human-readable, for instructing a computing device to perform specific operations, and including, but not limited to, application software, desktop applications, scripts, binaries, operating systems, device drivers, boot loaders, shells, utilities, system software, JAVASCRIPT, web pages, web applications, plugins, embedded software, microcode, compilers, debuggers, interpreters, virtual machines, linkers, and text editors.

Computing device 500 also may include read only memory (ROM) 508 or other static storage device coupled to bus 502 for storing static information and instructions for processor(s) 504.

One or more mass storage devices 510 may be coupled to bus 502 for persistently storing information and instructions on fixed or removable media, such as magnetic, optical, solid-state, magnetic-optical, flash memory, or any other available mass storage technology. The mass storage may be shared on a network, or it may be dedicated mass storage. Typically, at least one of the mass storage devices 510 (e.g., the main hard disk for the device) stores a body of program and data for directing operation of the computing device, including an operating system, user application programs, driver and other support files, as well as other data files of all sorts.

Computing device 500 may be coupled via bus 502 to display 512, such as a liquid crystal display (LCD) or other electronic visual display, for displaying information to a computer user. In some configurations, a touch sensitive surface incorporating touch detection technology (e.g., resistive, capacitive, etc.) may be overlaid on display 512 to form a touch sensitive display for communicating touch gesture (e.g., finger or stylus) input to processor(s) 504.

An input device 514, including alphanumeric and other keys, may be coupled to bus 502 for communicating information and command selections to processor 504. In addition to or instead of alphanumeric and other keys, input device 514 may include one or more physical buttons or switches such as, for example, a power (on/off) button, a "home" button, volume control buttons, or the like.

Another type of user input device may be a cursor control 516, such as a mouse, a trackball, or cursor direction keys for communicating direction information and command selections to processor 504 and for controlling cursor movement on display 512. This input device typically has two degrees of freedom in two axes, a first axis (e.g., x) and a second axis (e.g., y), that allows the device to specify positions in a plane.

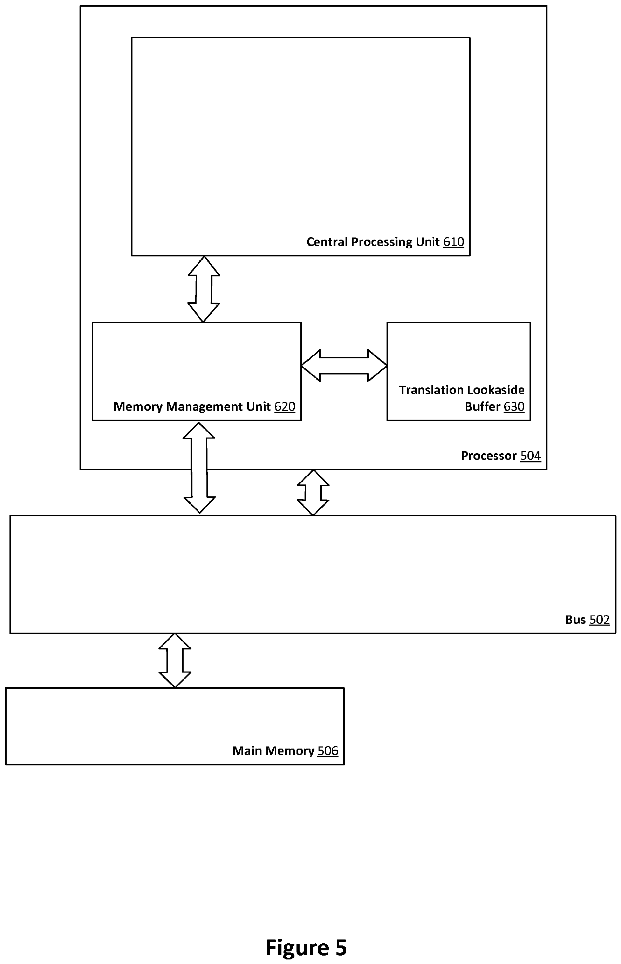

While in some configurations, such as the configuration depicted in Figure 5, one or more of display 512, input device 514, and cursor control 516 are external components (i.e., peripheral devices) of computing device 500, some or all of display 512, input device 514, and cursor control 516 are integrated as part of the form factor of computing device 500 in other configurations.

Functions of the disclosed systems, methods, and modules may be performed by computing device 500 in response to processor(s) 504 executing one or more programs of software instructions contained in main memory 506. Such instructions may be read into main memory 506 from another storage medium, such as storage device(s) 510. Execution of the software program instructions contained in main memory 506 cause processor(s) 504 to perform the functions of the disclosed systems, methods, and modules.

While in some implementations, functions of the disclosed systems and methods are implemented entirely with software instructions, hard-wired or programmable circuitry of computing device 500 (e.g., an ASIC, a FPGA, or the like) may be used in place of or in combination with software instructions to perform the functions, according to the requirements of the particular implementation at hand.

The term "storage media" as used herein refers to any non-transitory media that store data and/or instructions that cause a computing device to operate in a specific fashion. Such storage media may comprise non-volatile media and/or volatile media. Non-volatile media includes, for example, non-volatile random access memory (NVRAM), flash memory, optical disks, magnetic disks, or solid-state drives, such as storage device 510. Volatile media includes dynamic memory, such as main memory 506. Common forms of storage media include, for example, a floppy disk, a flexible disk, hard disk, solid-state drive, magnetic tape, or any other magnetic data storage medium, a CD-ROM, any other optical data storage medium, any physical medium with patterns of holes, a RAM, a PROM, and EPROM, a FLASH-EPROM, NVRAM, flash memory, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 502. Transmission media can also take the form of acoustic or light waves, such as those generated during radio-wave and infra-red data communications.

Various forms of media may be involved in carrying one or more sequences of one or more instructions to processor(s) 504 for execution. For example, the instructions may initially be carried on a magnetic disk or solid-state drive of a remote computer. The remote computer can load the instructions into its dynamic memory and send the instructions over a telephone line using a modem. A modem local to computing device 500 can receive the data on the telephone line and use an infra-red transmitter to convert the data to an infra-red signal. An infra-red detector can receive the data carried in the infra-red signal and appropriate circuitry can place the data on bus 502. Bus 502 carries the data to main memory 506, from which processor(s) 504 retrieves and executes the instructions. The instructions received by main memory 506 may optionally be stored on storage device(s) 510 either before or after execution by processor(s) 504.

Computing device 500 also may include one or more communication interface(s) 518 coupled to bus 502. A communication interface 518 provides a two-way data communication coupling to a wired or wireless network link 520 that is connected to a local network 522 (e.g., Ethernet network, Wireless Local Area Network, cellular phone network, Bluetooth wireless network, or the like). Communication interface 518 sends and receives electrical, electromagnetic, or optical signals that carry digital data streams representing various types of information. For example, communication interface 518 may be a wired network interface card, a wireless network interface card with an integrated radio antenna, or a modem (e.g., ISDN, DSL, or cable modem).

Network link(s) 520 typically provide data communication through one or more networks to other data devices. For example, a network link 520 may provide a connection through a local network 522 to a host computer 524 or to data equipment operated by an Internet Service Provider (ISP) 526. ISP 526 in turn provides data communication services through the world wide packet data communication network now commonly referred to as the "Internet" 528. Local network(s) 522 and Internet 528 use electrical, electromagnetic or optical signals that carry digital data streams. The signals through the various networks and the signals on network link(s) 520 and through communication interface(s) 518, which carry the digital data to and from computing device 500, are example forms of transmission media.

Computing device 500 can send messages and receive data, including program code, through the network(s), network link(s) 520 and communication interface(s) 518. In the Internet example, a server 530 might transmit a requested code for an application program through Internet 528, ISP 526, local network(s) 522 and communication interface(s) 518.

The received code may be executed by processor 504 as it is received, and/or stored in storage device 510, or other non-volatile storage for later execution

The above-described basic computer hardware is presented for purpose of illustrating the basic underlying computer components that may be employed for implementing the subject innovations. The subject innovations, however, are not necessarily limited to any particular computing environment or computing device configuration. Instead, the subject innovations may be implemented in any type of system architecture or processing environment that one skilled in the art, in light of this disclosure, would understand as capable of supporting the features and functions of the subject innovations as presented herein.

### Basic Processor

Referring now to Figure 5, it is a block diagram that illustrates an example embodiment of the processor 504 upon which methods performing the subject innovations may be executed. Processor 504 and its components, including their connections, relationships, and functions, is meant to be exemplary only, and not meant to limit implementations of the subject innovations. Other processors suitable for performing the relevant methods may have different components, including components with different connections, relationships, and functions.

The central processing unit (CPU) 610 is the part of the processor that is responsible for the execution of code instructions and controlling the other modules of the processor 504. The CPU may also perform a wide array of other functions, such as interacting through the bus 502 with the other components of the computer system 500.

The memory management unit (MMU) 620 is responsible for managing interactions between the CPU 610 and the main memory 506. The instructions of a computer process running on CPU 610 will contain references to virtual memory addresses rather than the physical address in main memory 506 where the process data is stored. The MMU 620 translates between these virtual addresses and the physical address in main memory needed to actually access the data.

Virtual addresses are used for several reasons. First, a computer process is unlikely to know in advance where it will be stored in main memory 506. The use of virtual addresses allows the process to be stored anywhere in main memory 506. The memory assigned to a process is presented to it as a contiguous range known as a virtual address space. However, the physical addresses to which this virtual address space is assigned need not be contiguous. This allows it to use gaps between other processes in main memory. These sections may have previously been assigned to now closed processes.

The use of virtual addresses also allows the MMU 620 to provide memory protection. Memory protection refers to only allowing a process to access the section of physical memory assigned to its virtual address space. Using virtual addresses allows the MMU 620 to ensure that all of the virtual addresses are translated in to physical addresses that the process is allowed to access or, if an address outside the virtual address space is attempted to be accessed, return an error. This prevents processes from interfering with one other.

To provide this functionality, a mapping between virtual addresses and physical memory address is kept. This mapping is known as a page table as it is a mapping between small sections, known as pages, of physical and virtual memory. The page table could be kept in main memory 506. However, this would mean that two main memory 506 accesses would be needed for every virtual address access performed. The MMU 620 would need to first access main memory to receive the relevant part of the page table. The correct physical address for the requested virtual address is then determined by the MMU 620. The memory access is then performed using the physical address. Requiring two main memory 506 accesses has a significant performance impact as accessing main memory is much slower than performing operations on the processor 504.

To minimize the number of memory accesses required, a component known as a translation lookaside buffer (TLB) 630 may be provided. The translation lookaside buffer (TLB) 630 is a small, fast cache for storing page table entries. The TLB is typically implemented as a content addressable memory but may be implemented using any suitably fast memory.

While the TLB 630 is typically not large enough to store all of the page table, or even the entire page table for a given process, it can store the parts of the page table that the MMU 620 expects to be used imminently. Various algorithms, with both hardware and software implementations, are known in the art to optimize which part of the page table is stored in the TLB 630.

The mappings stored in the TLB 630 are used to translate from physical to virtual addresses without an additional main memory access. When the MMU 620 attempts to access a virtual address whose mapping is not present in the TLB 630, the MMU 620 loads the relevant mapping from main memory 504. The relevant mapping is used by the MMU and/or stored in the TLB 630 for future use.

### Memory Use by the Extractor System

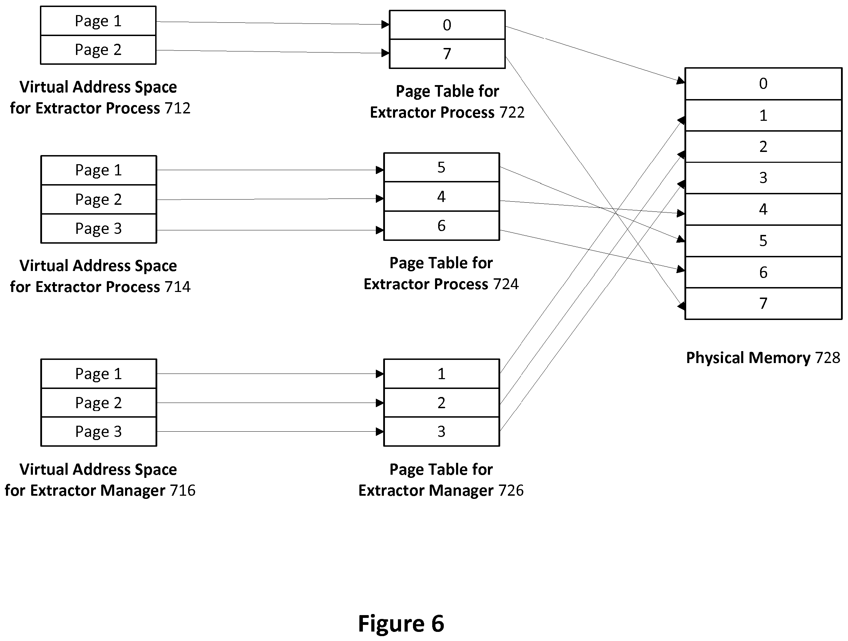

Referring now to Figure 6, it is a diagram that illustrates an example embodiment of how an extractor subsystem (e.g., 142) is represented in virtual and physical memory. Alternatively or additionally, it could be considered to represent the state of virtual and physical memory while an extraction method (e.g., 200) relating to the subject innovations is being executed by a processor (e.g., 504) of a computing device (e.g., 500).

Virtual address spaces 712 and 714 of two extractor processes (e.g., 146-1, 146-2) are shown. A virtual address space 716 of the extractor manager (e.g. 144) also is shown.

These virtual address spaces 712, 714, 716 are mapped to locations in physical memory 728 by respective page tables 722, 724, 726. The page tables 722-726 indicate the page of the physical memory to which each page of virtual memory maps. The arrows from the virtual address spaces 712-716 to the page tables 722-726 illustrate from which page of the respective virtual address space the respective page table is mapping. Similarly, the arrows from the page tables 722-726 to physical memory 728 illustrate to which pages of physical memory they are being mapped. It should be noted that the page tables may be stored in either or both of main memory 504 and the TLB 620.

The provision of the virtual address spaces 712-716 prevents an extractor process from affecting the memory space of both the extractor manager 144 and another extractor process. This minimizes the probability that the critical malfunctioning of a particular extractor process will affect the extractor manager 144 or the other extractor processes.

It should be noted that using the virtual memory mechanisms associated with computer processes to provide an extractor has substantial advantages. By using these mechanisms, the extractor system is able to benefit from hardware adapted to these purposes, such the MMU 620 and the TLB 630. It is also able to benefit from the process management functionality of the operating system. By using these existing mechanisms, the extractor system is likely to have significantly improved performance and increased reliability compared with other methods of providing the foregoing benefits. It is also likely that the use of such mechanisms will substantially reduce the cost of implementing such an extractor system.

### Extensions and Alternatives

It is understood that any specific order or hierarchy of steps in the processes disclosed is an illustration of example approaches. Based upon design preferences, it is understood that the specific order or hierarchy of steps in the processes may be rearranged, or that all illustrated steps be performed. Some of the steps may be performed simultaneously. For example, in certain circumstances, multitasking and parallel processing may be advantageous. Moreover, the separation of various system components illustrated above should not be understood as requiring such separation, and it should be understood that the described program components and systems can generally be integrated together in a single software product or packaged into multiple software products.

Various modifications to these aspects will be readily apparent, and the generic principles defined herein may be applied to other aspects. Thus, the claims are not intended to be limited to the aspects shown herein, but is to be accorded the full scope consistent with the language claims, where reference to an element in the singular is not intended to mean "one and only one" unless specifically so stated, but rather "one or more." Unless specifically stated otherwise, the term "some" refers to one or more. Unless specifically stated otherwise, the term "may" is used to express one or more nonlimiting possibilities. Headings and subheadings, if any, are used for convenience only and do not limit the subject innovations.

A phrase, for example, an "aspect", an "embodiment", a "configuration", or an "implementation" does not imply that the aspect, the embodiment, the configuration, or the implementation is essential to the subject innovations or that the aspect, the embodiment, the configuration, or the implementation applies to all aspects, embodiments, configurations, or implementations of the subject innovations. A disclosure relating to an aspect, an embodiment, a configuration, or an implementation may apply to all aspects, embodiments, configurations, or implementations, or one or more aspects, embodiments, configurations, or implementations. A phrase, for example, an aspect, an embodiment, a configuration, or an implementation may refer to one or more aspects, embodiments, configurations, or implementations and vice versa.

## Claims

1. A data extracting system comprising:
an extractor manager (144); and
plural extractors (148), wherein each extractor (148) is configured to modify input data items to provide modified output data items and wherein each extractor (148) is contained within an extractor process (146) that is distinct from one or more processes in which the extractor manager (144) is contained, wherein the extractor manager (144) is configured to determine when it expects the extractors (148) to be used and is configured to initialize an extractor process (146) shortly before it is needed, wherein the determination is performed by training a machine learning model on historical logs of extractor usage, wherein the logs contain an order in which different extractors (148) have been used, times at which the extractors (148) have been used, and individuals who have used these extractors (148); and
wherein the extractor manager (144) is configured to perform:
parsing an instruction to perform extraction, the instruction relating to one or more data items;
allocating, based on the instruction and/or the one or more data items, the one or more data items to one or more of the plurality of extractors (148) by:
determining that a data item of the one or more data items has been extracted previously by one or more of checking for a database entry, reading a list of data objects stored in an extractor manager memory, reading contents of a file, analyzing metadata of the data item or analyzing contents of the data item, wherein one or more annotations are associated with one or more sections of the corresponding modified data item from a previous extraction;
identifying an extractor type used for the previous extraction of the data item based on a stored record of the extractor type previously used for extracting the data item and in response to an override flag not having been set; and
allocating the data item to an extractor (148) of the identified extractor type from the plurality of extractors (148);
receiving one or more modified data items from the one or more of the plurality of extractors (148); and
outputting the one or more modified data items.

2. A data extracting system as claimed in claim 1, wherein each extractor (148) is contained within an extractor process (146) that is distinct from processes in which other ones of the plural extractors (148) are contained.

3. A data extracting system as claimed in any preceding claim, wherein the extractor manager (144) is configured to use an extractor process (146) for multiple extractions.

4. A data extracting system as claimed in any preceding claim, wherein the extractor manager (144) is configured to create a number of processes based on number of processes/simultaneous multithreading capabilities of processor(s) and/or virtual machines.

5. A data extracting system as claimed in any preceding claim, wherein the extractor manager (144) is configured to limit resource e.g. memory, available to an extractor process (146).

6. A data extracting system as claimed in any preceding claim, wherein the processes are executed on hardware external to hardware on which the extractor manager (144) is executed.

7. A data extracting system as claimed in any preceding claim, wherein the system has hardware support for virtual addresses and process separation.

8. A data extracting system as claimed in any preceding claim, configured to provide higher priority to the extractor manager (144) than to extractor processes (146).

9. A method performed in a data extracting system having an extractor manager (144) and plural extractors (148), each extractor (148) is contained within an extractor process (146) that is distinct from one or more processes in which the extractor manager (144) is contained, wherein the extractor manager (144) is configured to determine when it expects the extractors (148) to be used and is configured to initialize an extractor process shortly before it is needed, wherein the determination is performed by training a machine learning model on historical logs of extractor usage, wherein the logs contain an order in which different extractors (148) have been used, times at which the extractors (148) have been used, and individuals who have used these extractors (148), the method comprising:
each extractor (148) modifying input data items to provide modified output data items, the extractor manager (144) performing:
parsing an instruction to perform extraction, the instruction relating to one or more data items;
allocating, based on the instruction and/or the one or more data items, the one or more data items to one or more of the plurality of extractors (148) by:
determining that a data item of the one or more data items has been extracted previously by one or more of checking for a database entry, reading a list of data objects stored in an extractor manager memory, reading contents of a file, analyzing metadata of the data item or analyzing contents of the data item, wherein one or more annotations are associated with one or more sections of the corresponding modified data item from a previous extraction;
identifying an extractor type used for the previous extraction of the data item based on a stored record of the extractor type previously used for extracting the data item and in response to an override flag not having been set;
allocating the data item to an extractor (148) of the identified extractor type from the plurality of extractors (148);
receiving one or more modified data items from the one or more of the plurality of extractors (148); and
outputting the one or more modified data items.

10. A method as claimed in claim 9, wherein each extractor (148) is contained within an extractor process (146) that is distinct from processes in which other ones of the plural extractors (148) are contained.

11. A method as claimed in any of claims 9 to 10, comprising the extractor manager (144) using an extractor process (146) for multiple extractions.

12. A method as claimed in any of claims 9 to 11, comprising the extractor manager (144) creating a number of processes based on number of processes/simultaneous multithreading capabilities of processor(s) and/or virtual machines.

13. A method as claimed in any of claims 9 to 12, comprising the extractor manager (144) limiting resource e.g. memory, available to an extractor process (144).

14. A method as claimed in any of claims 9 to 13, comprising providing a higher priority to the extractor manager (144) than to extractor processes (144).

15. A computer program comprising instruction that when executed by a data extracting system having an extractor manager (144) and plural extractors (148) cause it to perform the method of any of claims 9 to 14.

## Patentansprüche

1. Datenextraktionssystem, umfassend:
einen Extraktionsmanager (144); und
vielfache Extraktoren (148), wobei jeder Extraktor (148) konfiguriert ist, um Eingabedatenelemente zu modifizieren, um modifizierte Ausgabedatenelemente bereitzustellen, und wobei jeder Extraktor (148) in einem Extraktionsprozess (146) enthalten ist, der sich von einem oder mehreren Prozessen unterscheidet, in denen der Extraktionsmanager (144) enthalten ist, wobei der Extraktionsmanager (144) konfiguriert ist, um zu bestimmen, wann er erwartet, dass die Extraktoren (148) verwendet werden, und konfiguriert ist, um einen Extraktionsprozess (146) zu initialisieren, kurz bevor er behignötigt wird, wobei die Bestimmung durch Trainieren eines maschinellen Lernmodells auf historischen Protokollen der Extraktionsverwendung durchgeführt wird, wobei die Protokolle eine Reihenfolge, in der verschiedene Extraktoren (148) verwendet worden sind, Zeiten, zu denen die Extraktoren (148) verwendet worden sind, und Personen, die diese Extraktoren (148) verwendet haben, enthalten, und
wobei der Extraktionsmanager (144) konfiguriert ist, um Folgendes durchzuführen:
Parsen einer Anweisung zum Durchführen einer Extraktion, wobei sich die Anweisung auf ein oder mehrere Datenelemente bezieht;
Zuweisen, basierend auf der Anweisung und/oder dem einen oder den mehreren Datenelementen, des einen oder der mehreren Datenelemente zu einem oder mehreren der Vielzahl von Extraktoren (148) durch:
Bestimmen, dass ein Datenelement des einen oder der mehreren Datenelemente zuvor extrahiert wurde, durch eines oder mehrere von Prüfen eines Datenbankeintrags, Lesen einer Liste von Datenobjekten, die in einem Extraktionsmanagerspeicher gespeichert sind, Lesen eines Inhalts einer Datei, Analysieren von Metadaten des Datenelements oder Analysieren von Inhalten des Datenelements, wobei ein oder mehrere Vermerke mit einem oder mehreren Abschnitten des entsprechenden modifizierten Datenelements aus einer früheren Extraktion assoziiert sind,
Identifizieren eines Extraktionstyps, der für die vorherige Extraktion des Datenelements verwendet wurde, basierend auf einem gespeicherten Datensatz des Extraktionstyps, der zuvor zum Extrahieren des Datenelements verwendet wurde, und als Reaktion darauf, dass ein Überschreibungs-Flag nicht gesetzt wurde, und
Zuweisen des Datenelements zu einem Extraktor (148) des identifizierten Extraktionstyps aus der Vielzahl von Extraktoren (148);
Empfangen eines oder mehrerer modifizierter Datenelemente von einem oder mehreren der Vielzahl von Extraktoren (148); und
Ausgeben des einen oder der mehreren modifizierten Datenelemente.

2. Datenextraktionssystem nach Anspruch 1, wobei jeder Extraktor (148) in einem Extraktionsprozess (146) enthalten ist, der sich von Prozessen unterscheidet, in denen andere der vielfachen Extraktoren (148) enthalten sind.

3. Datenextraktionssystem nach einem vorherigen Anspruch, wobei der Extraktionsmanager (144) konfiguriert ist, um einen Extraktionsprozess (146) für mehrere Extraktionen zu verwenden.

4. Datenextraktionssystem nach einem vorherigen Anspruch, wobei der Extraktionsmanager (144) konfiguriert ist, um basierend auf einer Anzahl von Prozessen/gleichzeitigen Multithreading-Fähigkeiten von Prozessoren) und/oder virtuellen Maschinen eine Anzahl von Prozessen zu erzeugen.

5. Datenextraktionssystem nach einem vorherigen Anspruch, wobei der Extraktionsmanager (144) konfiguriert ist, um Ressource, z. B. Speicher zu begrenzen, die einem Extraktionsprozess (146) verfügbar ist.

6. Datenextraktionssystem nach einem vorherigen Anspruch, wobei die Prozesse auf einer Hardware außerhalb einer Hardware ausgeführt werden, auf der der Extraktionsmanager (144) ausgeführt wird.

7. Datenextraktionssystem nach einem vorherigen Anspruch, wobei das System Hardwareunterstützung für virtuelle Adressen und Prozesstrennung aufweist.

8. Datenextraktionssystem nach einem vorherigen Anspruch, das konfiguriert ist, um dem Extraktionsmanager (144) eine höhere Priorität als Extraktionsprozessen (146) bereitzustellen.

9. Verfahren, das in einem Datenextraktionssystem durchgeführt wird, das einen Extraktionsmanager (144) und vielfache Extraktoren (148) aufweist, wobei jeder Extraktor (148) in einem Extraktionsprozess (146) enthalten ist, der sich von einem oder mehreren Prozessen unterscheidet, in denen der Extraktionsmanager (144) enthalten ist, wobei der Extraktionsmanager (144) konfiguriert ist, um zu bestimmen, wann er erwartet, dass die Extraktoren (148) verwendet werden, und konfiguriert ist, um einen Extraktionsprozess zu initialisieren, kurz bevor er benötigt wird, wobei die Bestimmung durch Trainieren eines maschinellen Lernmodells auf historischen Protokollen der Extraktionsverwendung durchgeführt wird, wobei die Protokolle eine Reihenfolge, in der verschiedene Extraktoren (148) verwendet worden sind, Zeiten, zu denen die Extraktoren (148) verwendet worden sind, und Personen, die diese Extraktoren (148) verwendet haben, enthalten, das Verfahren umfassend:
Modifizieren von Eingabedatenelementen durch jeden Extraktor (148) , um modifizierte Ausgabedatenelemente bereitzustellen, wobei der Extraktionsmanager (144) Folgendes durchführt:
Parsen einer Anweisung zum Durchführen einer Extraktion, wobei sich die Anweisung auf ein oder mehrere Datenelemente bezieht;
Zuweisen, basierend auf der Anweisung und/oder dem einen oder den mehreren Datenelementen, des einen oder der mehreren Datenelemente zu einem oder mehreren der Vielzahl von Extraktoren (148) durch:
Bestimmen, dass ein Datenelement des einen oder der mehreren Datenelemente zuvor extrahiert wurde, durch eines oder mehrere von Prüfen eines Datenbankeintrags, Lesen einer Liste von Datenobjekten, die in einem Extraktionsmanagerspeicher gespeichert sind, Lesen eines Inhalts einer Datei, Analysieren von Metadaten des Datenelements oder Analysieren von Inhalten des Datenelements, wobei ein oder mehrere Vermerke mit einem oder mehreren Abschnitten des entsprechenden modifizierten Datenelements aus einer früheren Extraktion assoziiert sind,
Identifizieren eines Extraktionstyps, der für die vorherige Extraktion des Datenelements verwendet wurde, basierend auf einem gespeicherten Datensatz des Extraktionstyps, der zuvor zum Extrahieren des Datenelements verwendet wurde, und als Reaktion darauf, dass ein Überschreibungs-Flag nicht gesetzt wurde,
Zuweisen des Datenelements zu einem Extraktor (148) des identifizierten Extraktionstyps aus der Vielzahl von Extraktoren (148);
Empfangen eines oder mehrerer modifizierter Datenelemente von einem oder mehreren der Vielzahl von Extraktoren (148); und
Ausgeben des einen oder der mehreren modifizierten Datenelemente.

10. Verfahren nach Anspruch 9, wobei jeder Extraktor (148) in einem Extraktionsprozess (146) enthalten ist, der sich von Prozessen unterscheidet, in denen andere der vielfachen Extraktoren (148) enthalten sind.

11. Verfahren nach einem der Ansprüche 9 bis 10, umfassend, dass der Extraktionsmanager (144) einen Extraktionsprozess (146) für Mehrfachextraktionen verwendet.

12. Verfahren nach einem der Ansprüche 9 bis 11, umfassend, dass der Extraktionsmanager (144) basierend auf einer Anzahl von Prozessen/gleichzeitigen Multithreading-Fähigkeiten von Prozessoren) und/oder virtuellen Maschinen eine Anzahl von Prozessen erzeugt.

13. Verfahren nach einem der Ansprüche 9 bis 12, umfassend, dass der Extraktionsmanager (144) Ressource, z. B. Speicher, begrenzt, die einem Extraktionsprozess (144) verfügbar ist.

14. Verfahren nach einem der Ansprüche 9 bis 13, umfassend ein Bereitstellen einer höheren Priorität für den Extraktionsmanager (144) als den Extraktionsprozessen (144).

15. Computerprogramm, umfassend Anweisungen, die, wenn sie von einem Datenextraktionssystem ausgeführt werden, das einen Extraktionsmanager (144) und vielfache Extraktoren (148) aufweist, bewirken, dass es das Verfahren nach einem der Ansprüche 9 bis 14 durchführt.

## Revendications

1. Système d'extraction de données comprenant :
un gestionnaire d'extracteurs (144) ; et
plusieurs extracteurs (148), chaque extracteur (148) étant configuré pour modifier des éléments de données d'entrée afin de fournir des éléments de données de sortie modifiés et chaque extracteur (148) étant contenu dans un processus d'extracteur (146) qui est distinct d'un ou plusieurs processus dans lequel le gestionnaire d'extracteurs (144) est contenu, le gestionnaire d'extracteurs (144) étant configuré pour déterminer quand il prévoit que les extracteurs (148) soient utilisés et étant configuré pour initialiser un processus d'extracteur (146) peu avant qu'il ne soit nécessaire, ladite détermination étant réalisée par formation d'un modèle d'apprentissage automatique sur des journaux historiques d'utilisation d'extracteurs, lesdits journaux contenant un ordre dans lequel différents extracteurs (148) ont été utilisés, des moments auxquels les extracteurs (148) ont été utilisés, et des individus qui ont utilisé ces extracteurs (148) ; et
ledit gestionnaire d'extracteurs (144) étant configuré pour réaliser :
l'analyse d'une instruction pour réaliser une extraction, l'instruction se rapportant à un ou plusieurs éléments de données ;
l'attribution, sur la base de l'instruction et/ou du ou des éléments de données, du ou des éléments de données à l'un ou plusieurs de la pluralité d'extracteurs (148) par :
la détermination qu'un élément de données du ou des éléments de données a été extrait précédemment au moyen d'une ou plusieurs parmi la vérification d'une entrée de base de données, la lecture d'une liste d'objets de données stockée dans une mémoire de gestionnaire d'extracteurs, la lecture du contenu d'un fichier, l'analyse de métadonnées de l'élément de données ou l'analyse du contenu de l'élément de données, une ou plusieurs annotations étant associées à une ou plusieurs sections de l'élément de données modifié correspondant provenant d'une extraction précédente ;
l'identification d'un type d'extracteur utilisé pour l'extraction précédente de l'élément de données sur la base d'un enregistrement stocké du type d'extracteur précédemment utilisé en vue de l'extraction de l'élément de données et en réponse à un indicateur de priorité n'ayant pas été défini ; et
l'attribution de l'élément de données à un extracteur (148) du type d'extracteur identifié de la pluralité d'extracteurs (148) ;
la réception d'un ou plusieurs éléments de données modifiés en provenance du ou des extracteurs de la pluralité d'extracteurs (148) ; et
l'émission en sortie du ou des éléments de données modifiés.

2. Système d'extraction de données selon la revendication 1, chaque extracteur (148) étant contenu dans un processus d'extracteur (146) qui est distinct des processus dans lesquels d'autres de la pluralité d'extracteurs (148) sont contenus.

3. Système d'extraction de données selon une quelconque revendication précédente, ledit gestionnaire d'extracteurs (144) étant configuré pour utiliser un processus d'extracteur (146) pour de multiples extractions.

4. Système d'extraction de données selon une quelconque revendication précédente, ledit gestionnaire d'extracteurs (144) étant configuré pour créer un nombre de processus sur la base du nombre de processus/capacités de traitement multifilière simultané de processeur(s) et/ou de machines virtuelles.

5. Système d'extraction de données selon une quelconque revendication précédente, ledit gestionnaire d'extracteurs (144) étant configuré pour limiter les ressources, par exemple la mémoire, disponible pour un processus d'extracteur (146).

6. Système d'extraction de données selon une quelconque revendication précédente, lesdits processus étant exécutés sur du matériel externe au matériel sur lequel le gestionnaire d'extracteurs (144) est exécuté.

7. Système d'extraction de données selon une quelconque revendication précédente, ledit système comportant un support matériel pour des adresses virtuelles et la séparation des processus.

8. Système d'extraction de données selon une quelconque revendication précédente, configuré pour fournir une priorité plus élevée au gestionnaire d'extracteurs (144) qu'aux processus d'extracteur (146).

9. Procédé réalisé dans un système d'extraction de données comportant un gestionnaire d'extracteurs (144) et plusieurs extracteurs (148), chaque extracteur (148) est contenu dans un processus d'extracteur (146) qui est distinct d'un ou plusieurs processus dans lesquels le gestionnaire d'extracteurs (144) est contenu, ledit gestionnaire d'extracteurs (144) étant configuré pour déterminer quand il prévoit que les extracteurs (148) soient utilisés et est configuré pour initialiser un processus d'extracteur peu avant qu'il ne soit nécessaire, ladite détermination étant réalisée par formation d'un modèle d'apprentissage automatique sur des journaux historiques d'utilisation d'extracteurs, lesdits journaux contenant un ordre dans lequel différents extracteurs (148) ont été utilisés, des moments auxquels les extracteurs (148) ont été utilisés, et des individus qui ont utilisé ces extracteurs (148), le procédé comprenant :
chaque extracteur (148) modifiant des éléments de données d'entrée pour fournir des éléments de données de sortie modifiés, le gestionnaire d'extracteurs (144) réalisant :
l'analyse d'une instruction pour réaliser une extraction, l'instruction se rapportant à un ou plusieurs éléments de données ;
l'attribution, sur la base de l'instruction et/ou du ou des éléments de données, du ou des éléments de données à l'un ou plusieurs de la pluralité d'extracteurs (148) par :
la détermination qu'un élément de données du ou des éléments de données a été extrait précédemment au moyen d'une ou plusieurs parmi la vérification d'une entrée de base de données, la lecture d'une liste d'objets de données stockée dans une mémoire de gestionnaire d'extracteurs, la lecture du contenu d'un fichier, l'analyse de métadonnées de l'élément de données ou l'analyse du contenu de l'élément de données, une ou plusieurs annotations étant associées à une ou plusieurs sections de l'élément de données modifié correspondant provenant d'une extraction précédente ;
l'identification d'un type d'extracteur utilisé pour l'extraction précédente de l'élément de données sur la base d'un enregistrement stocké du type d'extracteur précédemment utilisé pour extraire l'élément de données et en réponse à un indicateur de priorité n'ayant pas été défini ;
l'attribution de l'élément de données à un extracteur (148) du type d'extracteur identifié de la pluralité d'extracteurs (148) ;
la réception d'un ou plusieurs éléments de données modifiés en provenance du ou des extracteurs de la pluralité d'extracteurs (148) ; et
l'émission en sortie du ou des éléments de données modifiés.

10. Procédé selon la revendication 9, chaque extracteur (148) étant contenu dans un processus d'extracteur (146) qui est distinct des processus dans lesquels d'autres de la pluralité d'extracteurs (148) sont contenus.

11. Procédé selon l'une quelconque des revendications 9 à 10, comprenant le gestionnaire d'extracteurs (144) utilisant un processus d'extracteur (146) pour de multiples extractions.

12. Procédé selon l'une quelconque des revendications 9 à 11, comprenant le gestionnaire d'extracteurs (144) créant un nombre de processus sur la base du nombre de processus/capacités de traitement multifilière simultané de processeur(s) et/ou de machines virtuelles.

13. Procédé selon l'une quelconque des revendications 9 à 12, comprenant le gestionnaire d'extracteurs (144) limitant les ressources, par exemple la mémoire, disponibles pour un processus d'extracteur (144).

14. Procédé selon l'une quelconque des revendications 9 à 13, comprenant la fourniture d'une priorité plus élevée au gestionnaire d'extracteurs (144) qu'aux processus d'extracteur (144).

15. Programme informatique comprenant des instructions qui, lorsqu'elles sont exécutées par un système d'extraction de données comportant un gestionnaire d'extracteurs (144) et plusieurs extracteurs (148), l'amènent à réaliser le procédé selon l'une quelconque des revendications 9 à 14.
